# EUROPÄISCHE PATENTSCHRIFT

(11) **EP 3 514 020 B1**
(45) Veröffentlichungstag und Bekanntmachung des Hinweises auf die Patenterteilung: **30.06.2021**
(21) Anmeldenummer: 18152713.6
(22) Anmeldetag: 22.01.2018
(51) Int. Cl.: B60R 21/217

(54) **LUFTSACKFÜHRUNGSVORRICHTUNG ZUM FÜHREN EINES AIRBAGS EINES KRAFTFAHRZEUGS, AIRBAGBAUEINHEIT MIT EINER SOLCHEN LUFTSACKFÜHRUNG SOWIE INNENVERKLEIDUNGSBAUTEIL UND VERFAHREN ZUM HERSTELLEN EINES ENTSPRECHENDEN INNENVERKLEIDUNGSBAUTEILS, UMFASSEND EINE DERARTIGE LUFTSACKFÜHRUNG**
AIR BAG GUIDING DEVICE FOR GUIDING A VEHICLE AIRBAG, AIRBAG UNIT WITH SUCH AN AIRBAG GUIDE AND INTERNAL CLADDING COMPONENT AND METHOD FOR PRODUCING A CORRESPONDING INTERNAL CLADDING COMPONENT, COMPRISING SUCH AN AIRBAG GUIDE
DISPOSITIF GUIDE DE COUSSIN GONFLABLE PERMETTANT DE GUIDER UN COUSSIN GONFLABLE D'UN VÉHICULE AUTOMOBILE, UNITÉ DE COUSSIN GONFLABLE DOTÉE D'UN TEL GUIDE DE COUSSIN GONFLABLE AINSI QUE PIÈCE DE REVÊTEMENT INTÉRIEUR ET PROCÉDÉ DE FABRICATION D'UNE PIÈCE DE REVÊTEMENT INTÉRIEUR CORRESPONDANTE COMPRENANT UN TEL GUIDE DE COUSSIN GONFLABLE

(43) Veröffentlichungstag der Anmeldung: 24.07.2019
(73) Patentinhaber: Motherson Innovations Company Limited, London, Greater London EC3A 6AP (GB)
(72) Erfinder: Nogaret, Eric, 68600 Biesheim (FR)
(74) Vertreter: Westphal, Mussgnug & Partner Patentanwälte mbB

(56) Entgegenhaltungen:
- EP-A1- 1 787 874
- EP-A1- 2 703 232
- DE-A1-102009 058 688

## Beschreibung

Die vorliegende Erfindung betrifft eine Luftsackführungsvorrichtung zum Führen eines Airbags eines Kraftfahrzeugs. Weiterhin betrifft die Erfindung eine Airbagbaueinheit mit einer solchen Luftsackführung sowie eine Innenverkleidungsbauteil, umfassend eine derartige Luftsackführung. Weiterhin betrifft die Erfindung ein Verfahren zum Herstellen eines Innenverkleidungsbauteils.

Airbags, mitunter auch als Luftsäcke bezeichnet, und haben sich als ein wirksames Instrument beim Insassenschutz im Falle eines Aufpralls eines Kraftfahrzeugs erwiesen, weshalb die Anzahl der in modernen Kraftfahrzeugen verbauten Airbags immer weiter zunimmt, um die Fahrzeuginsassen nicht nur bei frontalen Aufprallen, sondern auch bei seitlichen Aufprallen und Überschlägen wirkungsvoll schützen zu können.

Der Airbag wird im Falle eines Aufpralls oder Überschlags mittels eines Gasgenerators aufgeblasen. Der Airbag und der Gasgenerator sind üblicherweise zu einem Airbagmodul zusammengefasst, in welchem der Airbag im nicht aufgeblasenen Zustand zusammengefaltet angeordnet ist.

Damit Airbags ihre schützende Wirkung im Falle eines Aufpralls oder Überschlags wirkungsvoll entfalten können, ist es von hoher Wichtigkeit, dass sich der Airbag definiert aufblasen kann. Daher ist das Airbagmodul mit einem Führungskanal verbunden, auch als Schusskanal bezeichnet, der den Airbag während des Aufblasens definiert führt.

Aus diesen Ausführungen wird deutlich, dass eine relativ komplexe Airbagbaueinheit notwendig ist, um die einwandfreie Funktion des Airbags sicherstellen zu können. Die Airbagbaueinheit soll aber die Gestaltung des Innenraums des Kraftfahrzeugs so wenig wie möglich beeinflussen, weshalb die Airbagbaueinheit hinter der Innenverkleidung des Kraftfahrzeugs angeordnet ist. Die Innenverkleidung muss aber so ausgestaltet sein, dass der Airbag beim Auslösen ohne Beeinträchtigung seiner Funktion in den Innenraum des Fahrzeugs eindringen kann.

Zu diesem Zweck ist es bekannt, Innenverkleidungsbauteile mit Sollbruchstellen zu versehen, die vom sich aufblasenden Airbag geöffnet werden. Derart ausgestaltete Innenverkleidungsbauteile sind beispielsweise in der DE 101 2005 026 712 A1, der DE 101 2012 112 173 A1, der DE 10 2009 058 688 A1, der EP 1 787 874 A1 oder der EP 2 703 232 A1 offenbart.

Die EP 2 703 232 offenbart eine Luftsackführungsvorrichtung nach dem Oberbegriff des Anspruchs 1.

Die Innenverkleidungsbauteile werden in vielen Fällen spritzgegossen oder mittels eines Formwerkzeugs mit einem Unter- und Oberwerkzeug hergestellt. Folglich muss die Entformbarkeit gegeben sein. Wenn es die Gestaltung der Innenverkleidungsbauteile zulässt, können die Luftsackführungsvorrichtungen in die Innenverkleidungsbauteile integriert sein, so dass sie ohne einen zusätzlichen Herstellungsschritt zusammen mit der übrigen Innenverkleidung geformt wird. Wenn die Gestaltung der Innenverkleidungsbauteile dies nicht zulässt, werden separate Luftsackführungsvorrichtungen eingesetzt. Allen Innenverkleidungsbauteilen, die in der DE 101 2005 026 712 A1, der DE 101 2012 112 173 A1 oder der EP 2 703 232 A1 offenbart sind, ist gemein, dass die Führungskanäle von Strukturbauteilen gebildet werden, welche sich mehr oder weniger weit innerhalb der Innenverkleidungsbauteile erstrecken und üblicherweise spritzgegossen werden. An den Führungskanälen sind die Airbagmodule befestigt. Damit die Strukturbauteile die beim Auslösen des Airbags auftretenden Kräfte sicher aufnehmen können, müssen die Strukturbauteile eine bestimmte Mindestwandstärke aufweisen. Insbesondere dort, wo Wandabschnitte aufeinander stoßen, entstehen Materialhäufungen, welche bei Spritzgussbauteilen zu Einfallstellen führen. Beispielsweise bei dem in der EP 2 703 232 A1 offenbarten Innenverkleidungsbauteil stellen diese Einfallstellen keinen Nachteil dar, weil die Strukturbauteile einen Dreischichtaufbau aufweisen und mit einer relativ dicken Schaumschicht versehen sind. Derartige Schaumschichten sind aber relativ teuer und werden daher nur bei höherwertigeren Fahrzeugen verwendet.

Anstelle der geschäumten Abdeckungen können kaschierte oder gespritzte Trägerbauteile verwendet werden, welche direkt auf die Strukturbauteile aufgebracht werden, wie es beispielsweise in der DE 10 2005 026 712 A1 der Fall ist. Im Vergleich zu geschäumten Abdeckungen haben kostengünstigere Trägerbauteile den Nachteil, dass die Einfallstellen zu vom Innenraum sichtbaren Abzeichnungen führen. Da spritzgegossene Bauteile aufgrund des Entweichens der im Spritzgussmaterial enthaltenden Weichmachern mit der Zeit verspröden können, kann es an den Abzeichnungen zu Rissen und anderen optisch nachteiligen Veränderungen kommen.

Aufgabe einer Ausführungsform der vorliegenden Erfindung ist es, ein Innenverkleidungsbauteil anzugeben, mit welchem der oben beschriebenen Situation begegnet werden kann und mit welchem es insbesondere möglich ist, die beschriebenen Einfallstellen zu vermeiden und somit auch ohne die Verwendung von geschäumten Abdeckungen ein optisch dauerhaft ansprechendes Innenverkleidungsbauteil bereitzustellen.

Diese Aufgabe wird mit den in den Ansprüchen 1, 5, 6 und 8 angegebenen Merkmalen gelöst. Vorteilhafte Ausführungsformen sind Gegenstand der Unteransprüche.

Eine Ausführungsform der Erfindung betrifft eine Luftsackführungsvorrichtung zum Führen eines Airbags eines Kraftfahrzeugs, umfassend ein Formbauteil, welches einen Führungskanal für den Airbag mit einer Austrittsöffnung definiert, über welche der Airbag aus dem Führungskanal austreten kann, wobei das Formbauteil eine thermoplastische Kunststoffmatrix aufweist, und ein in das Formbauteil eingesetztes Einlegeteil, wobei das Einlegeteil einen ersten Abschnitt, mit welchem das Einlegeteil mit dem Formbauteil materialschlüssig verbunden ist, und zumindest einen zweiten Abschnitt aufweist, welcher relativ zum ersten Abschnitt beweglich mit dem ersten Abschnitt scharnierartig verbunden ist und der zweite Abschnitt die Austrittsöffnung verschließt und unter Einwirkung des Airbags beim Austreten aus dem Führungskanal öffnet, und das Einlegeteil dieselbe thermoplastische Kunststoffmatrix wie das Formbauteil umfasst und der thermoplastische Kunststoff die thermoplastische Kunststoffmatrix zumindest im zweiten Abschnitt selbstverstärkend ist, wobei das Formbauteil Verstärkungsrippen aufweist.

Thermoplastische Kunststoffe lassen sich in einem bestimmten Temperaturbereich reversibel verformen. Insbesondere lassen sich thermoplastische Kunststoffe schweißen.

Unter einem Formbauteil und einem Einlegeteil aus einem thermoplastischen Kunststoff bestehen nur aus diesem thermoplastischen Kunststoff, während Formbauteile und Einlegeteile mit einer thermoplastischen Kunststoffmatrix einen thermoplastischen Kunststoff umfassen, der als Matrix für weitere Komponenten dient. Insofern umfassen die Formbauteile und Einlegeteile in diesem Fall neben dem eigentlichen thermoplastischen Kunststoff noch weitere Zusätze.

Die Kunststoffmatrix des Einlegeteils soll vorschlagsgemäß zumindest im zweiten Abschnitt selbstverstärkend ("self-reinforced") sein. Um die Kunststoffmatrix selbstverstärkend auszuführen, können die Molekülstruktur und die Kristallinität des Kunststoffs gezielt verändert werden. Hierdurch kann insbesondere die Zugfestigkeit gesteigert werden, ohne weitere Komponenten zusetzen zu müssen. Weiterhin kann das selbstverstärkende Material sehr zäh ausgeführt werden, so dass es erst bei Temperaturen von unter -35°C bricht. Darüber hinaus können den selbstverstärkenden Kunststoffen weitere Komponenten zugesetzt werden, um bestimmte Eigenschaften gezielt zu verändern.

Da das Formbauteil und das Einlegeteil dieselbe thermoplastische Kunststoffmatrix aufweisen oder aus demselben thermoplastischen Kunststoff bestehen, können diese ohne größeren Aufwand materialschlüssig miteinander verbunden werden, insbesondere mit einer entsprechenden Gestaltung des Spritzgussverfahrens.

Der zweite Abschnitt ist scharnierartig mit dem ersten Abschnitt verbunden. Dies wird dadurch erreicht, dass am Übergang das Einlegeteil eine reduzierte Wandstärke aufweist. Folglich kann das Einlegeteil am Übergang vom ersten Abschnitt zum zweiten Abschnitt gebogen werden, ohne dass es bricht. Man spricht in diesem Fall auch von einem Filmscharnier.

Wie eingangs erwähnt, wird im Stand der Technik der Führungskanal von Vorsprüngen gebildet, welche vom Grundabschnitt des Strukturbauteils vorstehen. Da die Vorsprünge und der Grundabschnitt zusammenhängend spritzgegossen werden, entstehen Materialhäufungen, die zu Einfallstellen führen. Im Gegensatz dazu ist das Formbauteil ein separates Bauteil, auf welches ein Innenverkleidungsbauteil aufgespritzt werden kann. Materialhäufungen werden vermieden, so dass es möglich wird, ein Innenverkleidungsbauteil mit einem kaschierten oder gespritzten Trägerbauteil zu versehen, ohne dass Abzeichnungen entstehen. Wie eingangs erwähnt, sind derartige Trägerbauteile im Gegensatz zu geschäumten Abdeckungen vergleichsweise günstig, so dass mit der Verwendung von Innenverkleidungsbauteilen, welche die vorschlagsgemäße Luftsackführungsvorrichtung aufweisen, auch in kostengünstigeren Fahrzeugen eine vom Trägerbauteil gebildete oder getragene qualitativ höherwertigere Sichtoberfläche ohne Abzeichnungen bereitgestellt werden kann.

Der zweite Abschnitt des Einlegeteils bewegt sich beim Auslösen des Airbags relativ zum ersten Abschnitt. Eine reduzierte Wandstärke des zweiten Abschnitts hat den Vorteil, dass beim Öffnen der Austrittsöffnung infolge des Auslösens des Airbags weniger Masse bewegt und daher eine geringere Massenträgheit überwunden werden muss. Da sich der Airbag im Falle eines Aufpralls oder eines Überschlags sehr schnell aufblasen muss, unterstützt eine reduzierte Wandstärke ein schnelles Aufblasen des Airbags. Entsprechend geringer sind auch die im Airbagmodul wirkenden Rückschlagkräfte, welche während des Aufblasens aufgenommen werden müssen.

Dadurch, dass sich der Airbag innerhalb einer sehr kurzen Zeit aufblasen muss, tritt er explosionsartig aus der Austrittsöffnung aus, weshalb die Gefahr besteht, dass sich Teile vom Trägerbauteil oder vom Einlegeteil absplittern und die Insassen verletzen. Wie erwähnt, kann das Trägerbauteil mit dem Einlegeteil verbunden werden. Dadurch, dass das Einlegeteil zumindest im zweiten Abschnitt, der sich beim Auslösen des Airbags relativ zum ersten Abschnitt bewegt, mit der selbstverstärkenden Kunststoffmatrix oder dem selbstverstärkenden Kunststoff versehen ist, wird ein Absplittern von Teilen trotz einer reduzierten Wandstärke verhindert.

Erfindungsgemäß weist das Formbauteil Verstärkungsrippen auf. Neben der Verstärkung des Formbauteils lassen sich flanschartige Auflageflächen schaffen, an denen beispielsweise das Airbagmodul oder das Trägerbauteil befestigt werden kann. Diese Auflageflächen lassen sich mit den Verstärkungsrippen verstärken, ohne zu viel zusätzliches Material zu benötigen und folglich das Gewicht zu stark zu erhöhen.

Erfindungsgemäß weisen das Formbauteil und/oder das Einlegeteil eine Anzahl von Befestigungsabschnitten zum Fixieren eines Airbagmoduls auf. Hierdurch lässt sich das Airbagmodul einfach an der Luftsackführungsvorrichtung befestigen.

Eine erfindungsgemäße Ausführungsform zeichnet sich dadurch aus, dass die Befestigungsabschnitte Schraubenlöcher umfassen, über welche das Airbagmodul mittels einer Schraubenverbindung, welche insbesondere in die Luftsackführungsvorrichtung integrierte Bolzen aufweist, mit der Luftsackführungsvorrichtung fixiert ist. Schraubenverbindungen lassen sich einfach und kostengünstig bereitstellen und können im Bedarfsfall einfach wieder gelöst werden, beispielsweise dann, wenn ein Airbagmodul ausgetauscht werden soll. Die integrierten Bolzen werden ohne zusätzlichen Arbeitsgang bei der Herstellung der Luftsackführungsvorrichtung bereitgestellt.

Nach Maßgabe einer weiteren erfindungsgemäßen Ausführungsform umfassen die Befestigungsabschnitte Einhaköffnungen, über welche das Airbagmodul mittels einer Hakenverbindung mit der Luftsackführungsvorrichtung verbindbar ist. Hakenverbindungen haben den Vorteil, dass sie ohne Werkzeuge bereitgestellt werden können, allerdings werden spezielle Werkzeuge zum Lösen der Hakenverbindungen benötigt. Da Airbagmodule relativ selten ausgetauscht werden, entsteht hierdurch kein nennenswerter Nachteil.

Nach Maßgabe einer weiteren Ausführungsform ist der thermoplastische Kunststoff Polypropylen. Alternativ umfasst die thermoplastische Kunststoffmatrix Polypropylen. Polypropylen eignet sich in besonderer Weise für das Spritzgussverfahren und kann in verschiedenen Varianten hergestellt werden, insbesondere auch selbstverstärkend. Da es sich bei Polypropylen um einen sehr häufig verwendeten thermoplastischen Kunststoff handelt, sind seine Eigenschaften gut erforscht, was den Umgang in der Herstellung der vorschlagsgemäßen Luftsackführung vereinfacht. Darüber hinaus weist Polypropylen Festigkeitseigenschaften auf, welche denen von Metall ähneln, allerdings bietet Polypropylen den Vorteil des geringeren Gewichts gegenüber Metall.

In einer weitergebildeten Ausführungsform kann das Formbauteil faserverstärkt sein. Hierdurch lassen sich die Wandstärken des Formbauteils verringern, ohne dass sich die Festigkeit und insbesondere die Zugfestigkeit verringern. Zudem wird die Gefahr, dass Teile beim Auslösen des Airbags absplittern, verhindert. Das Einlegen eines Gewebes in das Formbauteil soll auch als Faserverstärkung verstanden werden. Es bietet sich an, das Formbauteil mit Glas-, Polypropylen-, und/oder Kohlefasern zu verstärken.

Eine Ausgestaltung der Erfindung betrifft eine Airbagbaueinheit für ein Kraftfahrzeug, umfassend ein Airbagmodul mit einem Airbag und einem mit dem Airbag zusammenwirkenden Gasgenerator zum Aufblasen des Airbags, und eine Luftsackführungsvorrichtung nach einem der zuvor vorgestellten Ausführungsformen, wobei das Airbagmodul an der Luftsackführungsvorrichtung befestigt ist.

Eine Ausführung der Erfindung betrifft ein Innenverkleidungsbauteil für ein Kraftfahrzeug, umfassend eine Luftsackführungsvorrichtung nach einem zuvor vorgestellten Ausführungsformen, ein Airbagmodul mit einem Airbag und einem mit dem Airbag zusammenwirkenden Gasgenerator zum Aufblasen des Airbags, wobei das Airbagmodul an der Luftsackführungsvorrichtung befestigt ist, und ein Trägerbauteil, welches im Bereich der Austrittsöffnung an der Luftsackführungsvorrichtung befestigt ist.

Die technischen Effekte und Vorteile, die sich mit der vorgeschlagenen Airbagbaueinheit und dem vorschlagsgemäßen Innenverkleidungsbauteil erreichen lassen, entsprechen denjenigen, die für die vorliegende Luftsackführungsvorrichtung erörtert worden sind. Zusammenfassend sei darauf hingewiesen, dass der Führungskanal von einem separaten Formbauteil gebildet wird, auf welchem ein Innenverkleidungsbauteil aufgespritzt werden kann. Materialhäufungen werden vermieden, so dass keine Einfallstellen mehr entstehen. Folglich können die Trägerbauteile einfach und mit einer geringen Wandstärke oder Wanddicke versehen werden, ohne dass Abzeichnungen und andere optisch nachteilige Stellen vom Innenraum aus zu sehen sind. Teure Schaumschichten zum Abdecken des Airbagmoduls und der Luftsackführungsvorrichtung werden nicht benötigt.

Da die Trägerbauteile dünn ausgeführt werden können, werden auch keine Hubschlaufen benötigt. Hubschlaufen bewirken, dass der zweite Abschnitt zunächst etwas entlang des Führungskanals über die freie Oberfläche der Abdeckung hinaus bewegt und erst dann gedreht wird. Hierdurch wird sichergestellt, dass sich der zweite Abschnitt vollständig öffnen kann und nicht von der geschäumten Abdeckung blockiert wird. Da die Trägerbauteile mit einer geringen Wandstärke oder Wanddicke versehen werden können, blockieren diese den zweiten Abschnitt nicht oder nur in einem zu vernachlässigendem Umfang. Es ist aber nicht ausgeschlossen, das Innenverkleidungsbauteil dennoch Hubschlaufen vorzusehen, wenn es notwendig sein sollte.

Die verringerte Wandstärke insbesondere des zweiten Abschnitts reduziert dessen Masse und die zu überwindende Massenträgheit, so dass ein schnelles Aufblasen des Airbags unterstützt wird. Weiterhin wird trotz der reduzierten Wandstärke aufgrund der Verwendung der selbstverstärkenden Kunststoffmatrix oder des selbstverstärkenden Kunststoffs ein Absplittern von Teilen verhindert.

Gemäß einer weiteren Ausführung ist das Trägerbauteil gespritzt oder gespritzt und mit einer Dekorschicht versehen ist. Zum Versehen mit einer Dekorschicht kann das Trägerbauteil kaschiert, lackiert, sprühlackiert oder überflutet werden. Wenn das Trägerbauteil kaschiert ist, wird üblicherweise eine Folie auf das Trägerbauteil aufgeklebt. Das hierfür verwendete Kaschiermittel kann ein Leim, Lack oder ein Wachs sein. Die Verbindung der Folie auf das Trägerbauteil kann auch mit Wärme und/oder Druck erfolgen, insbesondere dann, wenn das Trägerbauteil und/oder die Folie aus einem thermoplastischen Kunststoff bestehen oder diesen enthalten. Ein Kaschiermittel wird dann nicht benötigt. Unter Überfluten versteht man das Überziehen in diesem Fall des Trägerbauteils mit einer Schicht, die sich beim Überfluten im flüssigen Zustand befindet und anschließend aushärtet. Beim Aushärten kann die Schicht auch aufgeschäumt werden, wodurch die bereits erwähnte Schaumschicht entsteht. Das Innenverkleidungsbauteil lässt sich in dieser Ausführung auf einfache Weise an die übrige Gestaltung des Innenraums anpassen. Insbesondere durch ein Kaschieren lässt sich eine ansprechende Gestaltung des Innenraums umsetzen. Hierzu muss nur das Trägerbauteil entsprechend angepasst werden. Weitere Maßnahmen sind nicht erforderlich.. In besonders einfachen Versionen kann auf das Aufbringen einer weiteren Dekorschicht verzichtet werden.

Eine Ausführung der Erfindung betrifft ein Verfahren zum Herstellen eines Innenverkleidungsbauteils, umfassend folgende Schritte:
- Spritzgießen eines Formbauteils aus einem thermoplastischen Kunststoff oder einer thermoplastischen Kunststoffmatrix, wobei das Formbauteil einen Führungskanal für den Airbag mit einer Austrittsöffnung definiert, über welche der Airbag aus dem Führungskanal austreten kann,
- Spritzgießen eines in das Formbauteil eingesetzten Einlegeteils aus demselben thermoplastischen Kunststoff oder derselben thermoplastischen Kunststoffmatrix, wobei das Einlegeteil einen ersten Abschnitt, mit welchem das Einlegeteil mit dem Formbauteil materialschlüssig verbunden ist, und zumindest einen zweiten Abschnitt aufweist, welcher relativ zum ersten Abschnitt beweglich mit dem ersten Abschnitt scharnierartig verbunden ist und der zweite Abschnitt die Austrittsöffnung verschließt und unter Einwirkung des Airbags beim Austreten aus dem Führungskanal öffnet, wobei der thermoplastische Kunststoff oder die thermoplastischen Kunststoffmatrix zumindest im zweiten Abschnitt selbstverstärkend ist, und
- Befestigen eines Trägerbauteils im Bereich der Austrittsöffnung an der Luftsackführungsvorrichtung, welche von dem Formbauteil und dem Einlegeteil gebildet wird.

Aufgrund der Tatsache, dass sowohl das Formbauteil als auch das Einlegeteil dieselbe thermoplastische Kunststoffmatrix aufweisen oder aus demselben thermoplastischen Kunststoff bestehen, lässt sich durch eine entsprechende Gestaltung des Spritzgussverfahrens ein Materialschluss herstellen. Weitere Befestigungsmaßnahmen sind nicht notwendig. Da auf eine Schaumschicht verzichtet werden kann, lassen sich die Bereitstellungskosten für das Innenverkleidungsbauteil verringern. Zudem kann das Trägerbauteil direkt auf die Luftsackführungsvorrichtung aufgespritzt werden, was weitere Befestigungsmaßnahmen überflüssig werden lässt. Das Spritzgießen beispielsweise einer thermoplastischen Kunststoffmatrix, welcher Glasfasern zugesetzt ist, ist nicht aufwendiger als das Spritzgießen eines thermoplastischen Kunststoffs, da die Glasfasern bereits im Granulat, welches während des Spritzgussverfahrens geschmolzen wird, enthalten ist.

In einer weiteren Ausführung umfasst das Verfahren den Schritt des Befestigens eines Airbagmoduls mit einem Airbag und einem mit dem Airbag zusammenwirkenden Gasgenerator zum Aufblasen des Airbags an der Luftsackführungsvorrichtung. Airbagmodule werden als fertige Einheiten angeliefert, so dass sie nicht notwendigerweise direkt nach der Fertigstellung des Innenverkleidungsbauteils an der Luftsackführungsvorrichtung befestigt werden müssen. Allerdings bietet es sich an, diesen Schritt direkt oder kurz nach der Fertigstellung der Luftsackführungsvorrichtung durchzuführen, da so eine komplette Einheit an den Hersteller des betreffenden Kraftfahrzeugs geliefert werden kann, ohne dass dort das Airbagmodul an der Luftsackführungsvorrichtung befestigt werden muss.

Beispielhafte Ausführungsformen der Erfindung werden im Folgenden unter Bezugnahme auf die beigefügten Zeichnungen näher erläutert. Es zeigen
- Figur 1: ein Innenverkleidungsbauteil nach dem Stand der Technik anhand einer prinzipiellen Darstellung,
- Figur 2A: ein erstes Ausführungsbeispiel eines erfindungsgemäßem Innenverkleidungsbauteils anhand einer prinzipiellen Darstellung,
- Figur 2B: ein zweites Ausführungsbeispiel eines erfindungsgemäßem Innenverkleidungsbauteils anhand einer prinzipiellen Darstellung,
- Figur 3A: ein erstes Ausführungsbeispiel eines erfindungsgemäßen Formbauteils,
- Figur 3B: ein zweites Ausführungsbeispiel eines erfindungsgemäßen Formbauteils, jeweils anhand einer perspektivischen Darstellung,
- Figur 4A: ein erstes Ausführungsbeispiel eines erfindungsgemäßen Einlegeteils,
- Figur 4B: ein zweites Ausführungsbeispiel eines erfindungsgemäßen Einlegeteils,
- Figur 4C: ein drittes Ausführungsbeispiel eines erfindungsgemäßen Einlegeteils,
- Figur 4D: ein viertes Ausführungsbeispiel eines erfindungsgemäßen Einlegeteils, jeweils anhand einer perspektivischen Darstellung,
- Figur 5: ein drittes Ausführungsbeispiel eines erfindungsgemäßen Innenverkleidungsbauteils, und
- Figur 6: ein viertes Ausführungsbeispiel eines erfindungsgemäßen Innenverkleidungsbauteils, jeweils anhand einer Schnittdarstellung,
- Figur 7A: eine erste Ausgestaltung des in Figur 5 gekennzeichneten Bereichs X, und
- Figur 7B: eine zweite Ausgestaltung des in Figur 5 gekennzeichneten Bereichs X.

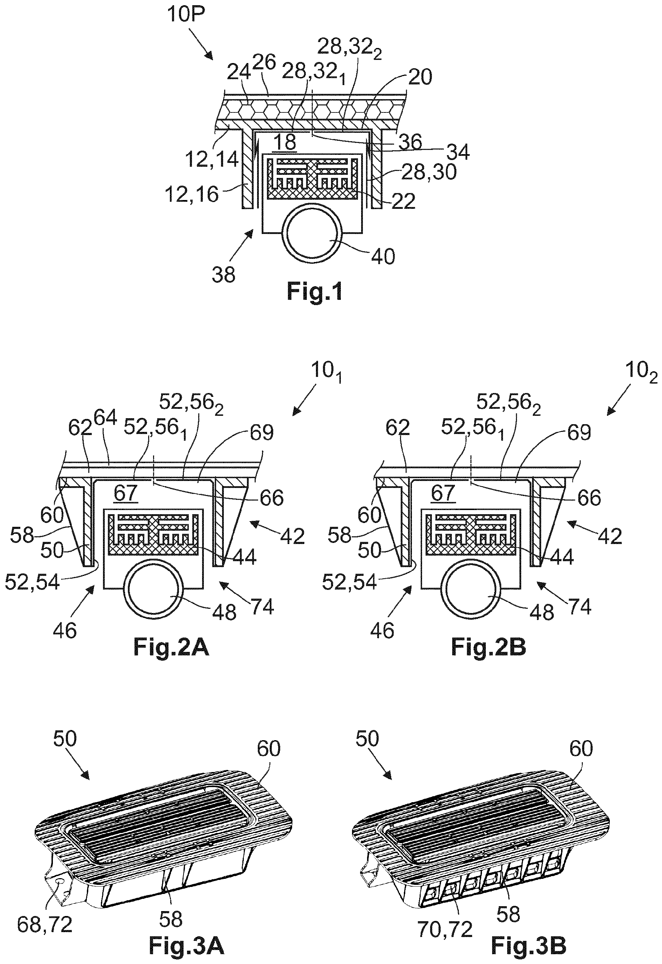

In Figur 1 ist ein Innenverkleidungsbauteil 10P nach dem Stand der Technik anhand einer prinzipiellen Darstellung gezeigt. Das Innenverkleidungsbauteil 10P umfasst ein Strukturbauteil 12, welches einen flächigen Grundabschnitt 14 und einen rohrförmigen Vorsprung 16 umfasst, der im Wesentlichen senkrecht zum Grundabschnitt 14 verläuft und einen Führungskanal 18 mit einer Austrittsöffnung 20 für einen Airbag 22 definiert. Auf der dem rohrförmigen Vorsprung 16 gegenüberliegenden Seite des Grundabschnitts 14 ist eine Schaumschicht 24 aufgebracht, die mit einer Dekorschicht versehen ist.

Im Führungskanal 18 ist ein Einlegeteil 28 angeordnet, welches einen ersten Abschnitt 30 und zwei zweite Abschnitte 32₁, 32₂ aufweist, die relativ zum ersten Abschnitt 30 beweglich sind. Der erste Abschnitt 30 weist eine Hubschlaufe 34 auf. Der erste Abschnitt 30 ist mit Ausnahme des Bereichs zwischen der Hubschlaufe 34 und dem Übergang zu den beiden zweiten Abschnitten materialschlüssig mit dem rohrförmigen Vorsprung 16 verbunden, während die beiden zweiten Abschnitte 32 materialschlüssig mit dem Grundabschnitt 14 verbunden sind.

Das Innenverkleidungsbauteil 10P umfasst eine Aufreißlinie 36, an welcher die beiden zweiten Abschnitte 32₁, 32₂ des Einlegeteils 28 aufeinander treffen und entlang welcher der Grundabschnitt 14, die Schaumschicht 24 und die Dekorschicht gezielt geschwächt sind, beispielsweise mittels einer Perforation.

Der Airbag 22 ist in einem Airbagmodul 38 angeordnet, welches ein mit dem Airbag 22 zusammenwirkenden Gasgenerator 40 umfasst. Das Airbagmodul 38 ist am rohrförmigen Vorsprung 16 auf nicht näher dargestellte Weise befestigt.

Der Airbag 22 ist im Airbagmodul 38 zusammengefaltet angeordnet. Im Falle eines Aufpralls oder eines Überschlags des Kraftfahrzeugs bläst der Gasgenerator 40 den Airbag 22 explosionsartig auf, so dass der Airbag 22 aufgrund der Vergrößerung seines Volumens gegen das Einlegeteil 28 prallt und dieses bezogen auf die Figur 1 nach oben drückt. Dabei wird die Hubschlaufe 34 gestrafft, so dass die beiden zweiten Abschnitte 32₁, 32₂ aus dem Führungskanal 18 geschoben werden. Die beiden zweiten Abschnitte 32 werden mit dem Grundabschnitt 14, die Schaumschicht 24 und der darauf angeordneten Dekorschicht an beiden Seiten der Aufreißlinie 36 ca. um 90° in etwa dort gedreht, wo der rohrförmige Vorsprung 16 in den Grundabschnitt 14 übergeht. Die Austrittsöffnung 20 wird somit freigegeben und der Airbag 22 kann sich vollständig aufblasen.

In Figur 2A ist ein vorschlagsgemäßes Innenverkleidungsbauteil 10₁ gemäß einem ersten Ausführungsbeispiel ebenfalls anhand einer prinzipiellen Darstellung gezeigt. Das vorschlagsgemäße Innenverkleidungsbauteil 10₁ weist kein Strukturbauteil auf, sondern eine Luftsackführungsvorrichtung 42 zum Führen eines Airbags 44, welcher wie zu Figur 1 beschrieben in einem Airbagmodul 46 zusammengefaltet angeordnet ist und mit einem Gasgenerator 48 zusammen wirkt.

Die Luftsackführungsvorrichtung 42 umfasst ein Formbauteil 50 und ein darin eingesetztes Einlegeteil 52, welche dieselbe thermoplastische Kunststoffmatrix aufweisen oder aus demselben thermoplastischen Kunststoff bestehen. Im dargestellten Beispiel wird die thermoplastische Kunststoffmatrix von Polypropylen gebildet oder der thermoplastische Kunststoff ist Polypropylen. Das Einlegeteil 52 umfasst einen ersten Abschnitt 54, mit welchem das Einlegeteil 52 materialschlüssig mit dem Formbauteil 50 verbunden ist, und zwei zweiten Abschnitte 56₁, 56₂, die scharnierartig und folglich relativ zum ersten Abschnitt 54 beweglich mit dem ersten Abschnitt 54 verbunden sind. Zumindest in den beiden zweiten Abschnitten 56₁, 56₂ ist die thermoplastische Kunststoffmatrix oder der thermoplastische Kunststoff selbstverstärkend ausgeführt (beispielsweise SRPP, self-reinforced polypropylen).

Das Formbauteil 50 ist mit Verstärkungsrippen 58 versehen, welche eine flanschartige Auflagefläche 60 unterstützen, mit denen das Formbauteil 50 mit einem Trägerbauteil 62 verbunden ist. Darüber hinaus ist das Trägerbauteil 62 mit den beiden zweiten Abschnitten 56 des Einlegeteils 52 verbunden. Das Trägerbauteil 62 kann auf das Formbauteil 50 und die beiden zweiten Abschnitte 56₁, 56₂ aufgespritzt oder auf eine andere Weise auf das Formbauteil 50 und die beiden zweiten Abschnitte 56₁, 56₂ aufgebracht werden.

Das Trägerbauteil 62 ist mittels einer Dekorschicht 64 kaschiert. Die Dekorschicht 64 kann als eine Folie ausgeführt sein, welche auf das Trägerbauteil aufgeklebt ist. Weiterhin ist das Formbauteil 50 faserverstärkt. Hierzu sind beispielsweise Kohle- oder Glasfasern in die thermoplastische Kunststoffmatrix eingebettet (nicht dargestellt).

Die beiden zweiten Abschnitte 56₁, 56₂ treffen an einer Aufreißlinie 66 aufeinander, an welcher das Trägerbauteil 62 und die Dekorschicht 64 gezielt geschwächt sind, beispielsweise mittels einer Perforation.

Die Luftsackführungsvorrichtung 42 definiert einen Führungskanal 67 mit einer Austrittsöffnung 69 für den Airbag 44. Beim Auslösen des Airbags 44 stößt dieser an die beiden zweiten Abschnitte 56₁, 56₂ des Einlegeteils 52 an, welche infolgedessen gegenüber dem ersten Abschnitt 54 auf beiden Seiten der Aufreißlinie 66 zusammen mit dem Trägerbauteil 62 und der Dekorschicht 64 um ca. 90° gedreht werden, wodurch die Austrittsöffnung 69 freigegeben wird und der Airbag 44 in den Innenraum des Kraftfahrzeugs eintreten kann.

Bei dem in Figur 1 dargestellten Innenverkleidungsbauteil 10P nach dem Stand der Technik ist dort, wo der rohrförmige Vorsprung 16 in den Grundabschnitt 14 übergeht, eine Materialhäufung vorhanden, wodurch es zu Einfallstellen kommen kann. Aufgrund der Verwendung der Schaumschicht 24 sind die Einfallstellen vom Innenraum des Kraftfahrzeugs aber nicht sichtbar.

Im Vergleich zu dem in Figur 1 dargestellten Innenverkleidungsbauteil 10P weist das Formbauteil 50 des erfindungsgemäßen Innenverkleidungsbauteils 10₁ keine Materialhäufung auf, so dass auch keine Einfallstellen auftreten können, die mit einer entsprechend dicken Schaumschicht 24 abgedeckt werden müssten. Folglich kann das Trägerbauteil 62 im Vergleich zur Schaumschicht 24 deutlich dünner ausgestaltet werden, so dass beim Auslösen des Airbags 44 weniger Masse bewegt werden muss. Selbiges gilt auch für das Einlegeteil 52 und insbesondere für die beiden zweiten Abschnitte 56₁, 56₂. Weiterhin ist auch keine Hubschlaufe notwendig, da das Trägerbauteil 62 die Bewegung der beiden zweiten Abschnitte 56₁, 56₂ im Gegensatz zur geschäumten Abdeckung nicht oder nicht nennenswert blockiert.

Die Verwendung einer selbstverstärkenden thermoplastischen Kunststoffmatrix oder eines selbstverstärkenden Kunststoffs zumindest im Bereich der beiden zweiten Abschnitte 56₁, 56₂ des Einlegeteils 52 verhindert, dass Teile des Trägerbauteils 62 beim Aufblasen des Airbags 44 absplittern.

Die Luftsackführungsvorrichtung 42 und das daran befestigte Airbagmodul 46 bilden zusammen eine Airbagbaueinheit 74.

In Figur 2B ist ein zweites Ausführungsbeispiel des erfindungsgemäßen Innenverkleidungsbauteils 10₂ anhand einer prinzipiellen Darstellung gezeigt. Der Aufbau des Innenverkleidungsbauteils 10₂ nach dem zweiten Ausführungsbeispiel gleicht weitgehend demjenigen des Innenverkleidungsbauteils 10₂ nach dem ersten Ausführungsbeispiel. Der wesentliche Unterschied ist, dass auf dem Trägerbauteil 62 keine Dekorschicht 64 aufgebracht ist.

In den Figuren 3A und 3B sind ein erstes bzw. ein zweites Ausführungsbeispiel des erfindungsgemäßen Formbauteils 50 jeweils anhand einer perspektivischen Darstellung gezeigt. Das Formbauteil 50 nach dem ersten Ausführungsbeispiel weist einen Befestigungsabschnitt 72 mit Schraubenlöchern 68 auf, mit denen das Airbagmodul 46 unter Ausbildung einer Schraubenverbindung an der Luftsackführungsvorrichtung 42 befestigt werden kann. Hierzu kann die Luftsackführungsvorrichtung 42 nicht dargestellte Bolzen aufweisen, welche durch die Schraubenlöcher 68 durchgeführt werden. Die Bolzen können in die Luftsackführungsvorrichtung 42 integriert und mit Gewinden versehen sein. Beim Formbauteil 50 nach dem zweiten Ausführungsbauteil weist der Befestigungsabschnitt 72 eine Anzahl von Einhaköffnungen 70 auf, in welche das Airbagmodul 46 eingehakt werden kann.

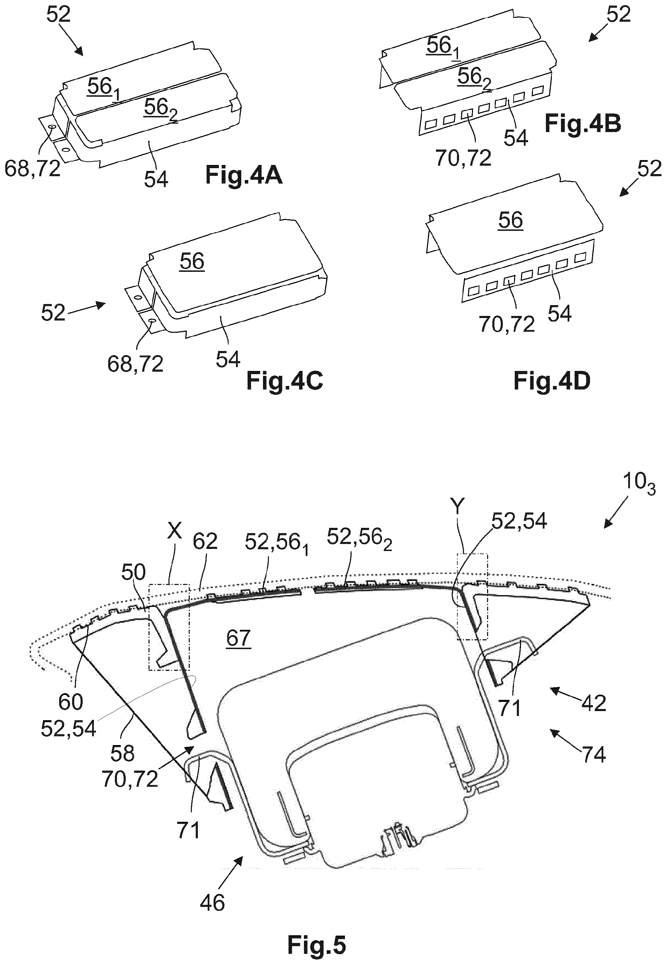

Die Figuren 4A bis 4D zeigen verschiedene Ausführungsformen des erfindungsgemäßen Einlegeteils 52 jeweils anhand einer perspektivischen Darstellung. Sie unterscheiden sich hinsichtlich der Anzahl der zweiten Abschnitte 56 und in der Art und Weise, wie das Airbagmodul 46 an der Luftsackführungsvorrichtung 42 befestigt werden kann.

In Figur 4A weist das Einlegeteil 52 eine auf dem Befestigungsabschnitt 72 angeordnete Anzahl von Schraubenlöchern 68 auf, welcher der Anzahl der Schraubenlöcher 68 des Formbauteils 50 nach dem in Figur 3a gezeigten ersten Ausführungsbeispiel entspricht. Der Befestigungsabschnitt 72 ist fest mit dem ersten Abschnitt 54 verbunden. Folglich kann das Airbagmodul 46 mittels einer Schraubenverbindung an der Luftsackführungsvorrichtung 42 befestigt werden, wobei die Schraubenverbindung sowohl das Formbauteil 50 als auch das Einlegeteil 52 umfasst. Das Einlegeteil 52 nach dem ersten Ausführungsbeispiel ist folglich mit dem ersten Ausführungsbeispiel des Formbauteils 50 (siehe Figur 3a) verbunden.

Darüber hinaus weist das in Figur 4A abgebildete Einlegeteil 52 zwei zweite Abschnitte 56₁, 56₂ auf, welche scharnierartig am ersten Abschnitt 54 befestigt und relativ zum ersten Abschnitt 54 beweglich sind. Wenn man den beweglichen Kanten der beiden zweiten Abschnitte 56₁, 56₂ folgt, entsteht in der Draufsicht eine H-Form.

In Figur 4B ist ein zweites Ausführungsbeispiel des erfindungsgemäßen Einlegeteils 52 dargestellt. Man erkennt, dass das Einlegeteil 52 nach dem zweiten Ausführungsbeispiel eine Anzahl von Einhaköffnungen 70 aufweist, über welche das Airbagmodul 46 mit der Luftsackführungsvorrichtung 42 verbindbar ist. Das zweite Ausführungsbeispiel des Einlegeteils 52 ist daher mit dem zweiten Ausführungsbeispiel des Formbauteils 50 (siehe Figur 3b) verbunden. Darüber hinaus weist das Einlegeteil 52 zwei zweite Abschnitte 56₁, 56₂ auf, so dass wiederum die für das erste Ausführungsbeispiel beschriebene H-Form der beweglichen Kanten entsteht.

In Figur 4C ist ein drittes Ausführungsbeispiel des erfindungsgemäßen Einlegeteils 52 gezeigt. Wie auch das erste Ausführungsbeispiel weist das Einlegeteil 52 nach dem dritten Ausführungsbeispiel die Schraubenlöcher 68 auf, so dass das Airbagmodul 46 mit dem ersten Ausführungsbeispiels des Formbauteils 50 unter Ausbildung einer Schraubenverbindung verbunden ist. Das Einlegteil weist allerdings nur einen zweiten Abschnitt 56 auf, so dass sich in der Draufsicht den beweglichen Kanten des zweiten Abschnitts 56 folgend eine U-Form ergibt.

In Figur 4D ist ein viertes Ausführungsbeispiel des erfindungsgemäßen Einlegeteils 52 wiedergegeben. Wie auch das zweite Ausführungsbeispiel weist das Einlegeteil 52 nach dem vierten Ausführungsbeispiel die Einhaköffnungen 70 auf, so dass das Airbagmodul 46 mit dem ersten Ausführungsbeispiels des Formbauteils 50 unter Ausbildung einer Hakenverbindung verbunden werden kann. Wie auch im dritten Ausführungsbeispiel weist das Einlegeteil 52 allerdings nur einen zweiten Abschnitt 56 auf, so dass sich in der Draufsicht den beweglichen Kanten des zweiten Abschnitts 56 folgend eine U-Form ergibt.

In Figur 5 ist ein drittes Ausführungsbeispiel eines erfindungsgemäßen Innenverkleidungsbauteils 10₃ anhand einer prinzipiellen Schnittdarstellung gezeigt. Das Einlegeteil 52 weist zwei zweite Abschnitte 56₁, 56₂ auf. Die Luftsackführungsvorrichtung 42 ist mit dem Trägerbauteil 62 verbunden, wobei sich das Trägerbauteil 62 sowohl über die mit den Verstärkungsrippen 58 verstärkten Auflageflächen als auch über die beiden zweiten Abschnitte 56₁, 56₂ erstreckt. Die Luftsackführungsvorrichtung 42 weist die Einhaköffnungen 70 auf, so dass das Airbagmodul 46 unter Ausbildung einer Hakenverbindung an der Luftsackführungsvorrichtung 42 befestigt ist. Hierzu weist das Airbagmodul 46 entsprechende Haken 71 auf. Man erkennt, dass die Hakenverbindung nur zu einer relativ groben Positionierung des Airbagmoduls 46 im Führungskanal 67 bewirkt. Die eigentliche Fixierung des Airbagmoduls 46 werden von anderen Abschnitten des Verkleidungsbauteils 10₃ bewirkt, insbesondere von dem Führungskanal 67 und dem Einlegeteil 52.

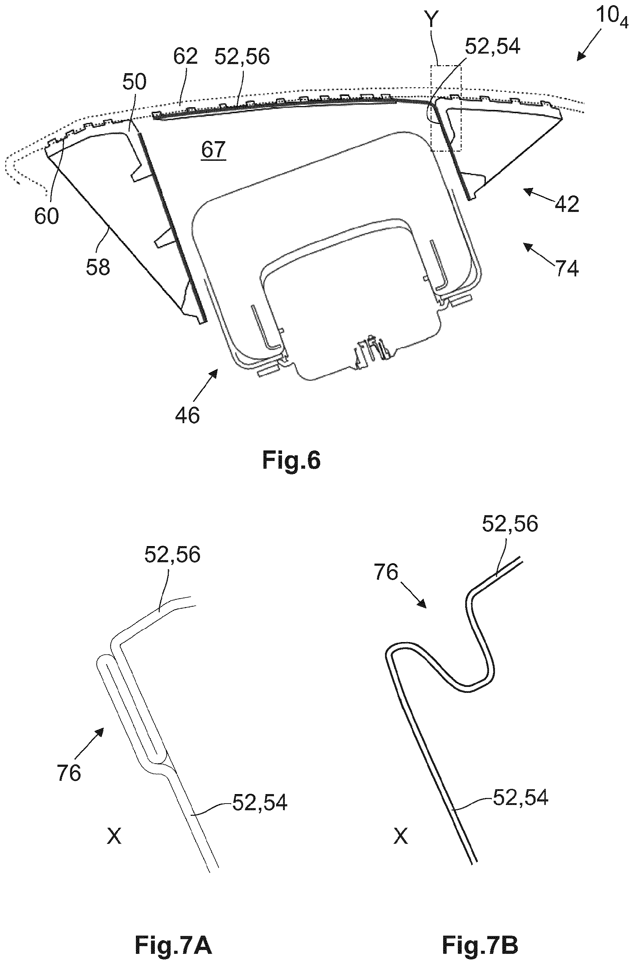

In Figur 6 ist ein viertes Ausführungsbeispiel eines erfindungsgemäßen Innenverkleidungsbauteils 10₄ anhand einer prinzipiellen Schnittdarstellung gezeigt. Das Einlegeteil 52 weist in diesem Fall nur einen zweiten Abschnitt 56 auf. Das Trägerbauteil 62 erstreckt sich über die mit den Verstärkungsrippen 58 verstärkten Auflageflächen 60 als auch über den zweiten Abschnitt 56. Das Airbagmodul 46 ist in diesem Ausführungsbeispiel über eine nicht näher gezeigte Schraubenverbindung in der Luftsackführungsvorrichtung 42 fixiert und in seiner Position eindeutig festgelegt.

In den Figuren 7A und 7B sind zwei Ausgestaltungen des Einlegeteils 52 im in Figur 5 gekennzeichneten Bereich X vergrößert dargestellt. Wie beschrieben, ist in der in Figur 5 gezeigten Ausgestaltung das Einlegeteil 52 mit dem ersten Abschnitt 54 materialschlüssig mit dem Formbauteil 50 verbunden, während die beiden zweiten Abschnitte 56₁, 56₂ scharnierartig und folglich relativ zum ersten Abschnitt 54 beweglich mit dem ersten Abschnitt 54 verbunden sind. Dies ist in den in den Figuren 7A und 7B gezeigten Ausgestaltungen ebenfalls der Fall, allerdings bildet der zweite Abschnitt 56 eine Hubschlaufe 76, welche in der in Figur 7A gezeigten Ausgestaltung versiegelt ist, während die Hubschlaufe 78 in Figur 7B offen ist. Ein wesentlicher Unterschied ist, dass der zweite Abschnitt 56 innerhalb der Hubschaufe 76 in der in Figur 7A gezeigten Ausgestaltung mit sich selbst in Kontakt kommt, so dass die Hubschlaufe 76 schichtweise aufgebaut ist, während in der in Figur 7B gezeigten Ausgestaltung die Hubschlaufe 76 eine U- oder V-Form aufweist und der zweite Abschnitt 56 nicht mit sich selbst in Kontakt tritt.

Einer der wesentlichen Unterschiede zwischen den in den Figuren 5 und 6 gezeigten Ausführungsbeispielen des Innenverkleidungsbauteils 10₃ und 10₄ ist, dass das Innenverkleidungsbauteil 10₃ nach dem dritten Ausführungsbeispiel zwei zweite Abschnitte 56₁, 56₂ aufweist, während das Innenverkleidungsbauteil 10₄ nach dem vierten Ausführungsbeispiel nur einen zweiten Abschnitt 56 umfasst. Im dritten Ausführungsbeispiel des Innenverkleidungsbauteils 10₃ kann beispielsweise im Bereich X eine Hubschlaufe 76 nach der in Figur 7A dargestellten Ausgestaltung und im Bereich Y eine Hubschlaufe 76 nach der in Figur 7B dargestellten Ausgestaltung vorgesehen sein. Es ist aber auch möglich, zumindest in einem der Bereiche X oder Y keine Hubschlaufe 76 vorzusehen. Auch können in beiden Bereichen X, Y eine baugleiche Hubschlaufe 76 vorgesehen werden.

Das in Figur 6 dargestellte Ausführungsbeispiel des Innenverkleidungsbauteils 10₄ weist nur einen zweiten Abschnitt 56 auf. Analog zu den obigen Ausführungen zum dritten Ausführungsbeispiel 10₃ kann im in Figur 6 gekennzeichneten Bereich Y des Innenverkleidungsbauteils 10₂ keine oder eine der in den Figuren 7A und 7B dargestellten Hubschlaufe 76 vorgesehen sein.

### Bezugszeichenliste

- 10, 10₁ - 10₄: Innenverkleidungsbauteil
- 10P: Innenverkleidungsbauteil nach dem Stand der Technik
- 12: Strukturbauteil
- 14: Grundabschnitt
- 16: Vorsprung
- 18: Führungskanal

- 20: Austrittsöffnung
- 22: Airbag
- 24: Schaumschicht
- 26: Dekorschicht
- 28: Einlegeteil

- 30: erster Abschnitt
- 32, 32₁, 32₂: zweiter Abschnitt
- 34: Hubschlaufe
- 36: Aufreißlinie
- 38: Airbagmodul

- 40: Gasgenerator
- 42: Luftsackführungsvorrichtung
- 44: Airbag
- 46: Airbagmodul
- 48: Gasgenerator

- 50: Formbauteil
- 52: Einlegeteil
- 54: erster Abschnitt
- 56, 56₁, 56₂: zweiter Abschnitt
- 58: Verstärkungsrippe
- 60: Auflagefläche
- 62: Trägerbauteil
- 64: Dekorschicht
- 66: Aufreißlinie
- 67: Führungskanal
- 68: Schraubenlöcher
- 69: Austrittsöffnung

- 70: Einhaköffnung
- 71: Haken
- 72: Befestigungsabschnitt
- 74: Airbagbaueinheit
- 76: Hubschlaufe

## Patentansprüche

1. Luftsackführungsvorrichtung zum Führen eines Airbags (44) eines Kraftfahrzeugs, umfassend
- ein Formbauteil (50), welches einen Führungskanal (67) für den Airbag (44) mit einer Austrittsöffnung (69) definiert, über welche der Airbag (44) aus dem Führungskanal (67) austreten kann, wobei das Formbauteil (50) eine thermoplastische Kunststoffmatrix aufweist, und
- ein in das Formbauteil (50) eingesetztes Einlegeteil (52), wobei das Einlegeteil (52)
- einen ersten Abschnitt (54), mit welchem das Einlegeteil (52) mit dem Formbauteil (50) materialschlüssig verbunden ist, und
- zumindest einen zweiten Abschnitt (56) aufweist, welcher relativ zum ersten Abschnitt (54) beweglich mit dem ersten Abschnitt (54) scharnierartig verbunden ist und der zweite Abschnitt (56) die Austrittsöffnung (69) verschließt und unter Einwirkung des Airbags (44) beim Austreten aus dem Führungskanal (67) öffnet, und
- das Einlegeteil (52) dieselbe thermoplastische Kunststoffmatrix wie das Formbauteil (50) umfasst und die thermoplastische Kunststoffmatrix zumindest im zweiten Abschnitt (56) selbstverstärkend ist,
**dadurch gekennzeichnet, dass**
- das Formbauteil (50) Verstärkungsrippen (58) und
- das Formbauteil (50) und/oder das Einlegeteil (52) eine Anzahl von Befestigungsabschnitten (72) zum Fixieren eines Airbagmoduls (46) aufweisen, wobei
o die Befestigungsabschnitte (72) Schraubenlöcher (68) umfassen, über welche das Airbagmodul (46) mittels einer Schraubenverbindung, welche in die Luftsackführungsvorrichtung integrierte Bolzen aufweist, mit der Luftsackführungsvorrichtung (42) fixiert ist, oder
o die Befestigungsabschnitte (72) Einhaköffnungen (70) umfassen, über welche das Airbagmodul (46) mittels einer Hakenverbindung mit der Luftsackführungsvorrichtung verbindbar ist.

2. Luftsackführungsvorrichtung nach Anspruch 1,
**dadurch gekennzeichnet, dass** der thermoplastische Kunststoff Polypropylen ist.

3. Luftsackführungsvorrichtung nach einem der Ansprüche 1 oder 2,
**dadurch gekennzeichnet, dass** das Formbauteil (50) faserverstärkt ist.

4. Luftsackführungsvorrichtung nach Anspruch 3,
**dadurch gekennzeichnet, dass** das Formbauteil (50) mit Glas-, Polypropylen- und/oder Kohlefasern faserverstärkt ist.

5. Airbagbaueinheit für ein Kraftfahrzeug, umfassend
- ein Airbagmodul (46) mit einem Airbag (44) und einem mit dem Airbag (44) zusammenwirkenden Gasgenerator (48) zum Aufblasen des Airbags (44), und
- eine Luftsackführungsvorrichtung (42) nach einem der vorherigen Ansprüche, wobei das Airbagmodul (46) an der Luftsackführungsvorrichtung (42) befestigt ist.

6. Innenverkleidungsbauteil für ein Kraftfahrzeug, umfassend
- eine Luftsackführungsvorrichtung (42) nach einem der Ansprüche 1 bis 4,
- ein Airbagmodul (46) mit einem Airbag (44) und einem mit dem Airbag (44) zusammenwirkenden Gasgenerator (48) zum Aufblasen des Airbags (44), wobei das Airbagmodul (46) an der Luftsackführungsvorrichtung (42) befestigt ist, und
- ein Trägerbauteil (62), welche im Bereich der Austrittsöffnung (69) an der Luftsackführungsvorrichtung (42) befestigt ist.

7. Innenverkleidungsbauteil nach Anspruch 6,
**dadurch gekennzeichnet, dass** das Trägerbauteil (62) gespritzt oder gespritzt und mit einer Dekorschicht (64) versehen ist.

8. Verfahren zum Herstellen eines Innenverkleidungsbauteils (10) nach einem der Ansprüche 6 oder 7, umfassend folgende Schritte:
- Spritzgießen eines Formbauteils (50) aus einem thermoplastischen Kunststoff oder einer thermoplastischen Kunststoffmatrix, wobei das Formbauteil (50) einen Führungskanal (67) für den Airbag (44) mit einer Austrittsöffnung (69) definiert, über welche der Airbag (44) aus dem Führungskanal (67) austreten kann,
- Spritzgießen eines in das Formbauteil (50) eingesetzten Einlegeteils (52) aus demselben thermoplastischen Kunststoff oder derselben thermoplastischen Kunststoffmatrix, wobei das Einlegeteil (52) einen ersten Abschnitt (54), mit welchem das Einlegeteil (52) mit dem Formteil materialschlüssig verbunden ist, und zumindest einen zweiten Abschnitt (56) aufweist, welcher relativ zum ersten Abschnitt (54) beweglich mit dem ersten Abschnitt (54) scharnierartig verbunden ist und der zweite Abschnitt (56) die Austrittsöffnung (69) verschließt und unter Einwirkung des Airbags (44) beim Austreten aus dem Führungskanal (67) öffnet, wobei der thermoplastische Kunststoff oder die thermoplastischen Kunststoffmatrix zumindest im zweiten Abschnitt (56) selbstverstärkend ist, und
- Befestigen eines Trägerbauteils (62) im Bereich der Austrittsöffnung (69) an der Luftsackführungsvorrichtung (42), welche vom Formbauteil (50) und vom Einlegeteil (52) gebildet wird.

9. Verfahren nach Anspruch 8, weiterhin umfassend den Schritt des Befestigens eines Airbagmoduls (46) mit einem Airbag (44) und einem mit dem Airbag (44) zusammenwirkenden Gasgenerator (48) zum Aufblasen des Airbags (44) an der Luftsackführungsvorrichtung (42).

## Claims

1. Airbag guiding device for guiding an airbag (44) of a motor vehicle, comprising
- a molded component (50) that defines a guide duct (67) for the airbag (44) and has an outlet (69) through which the airbag (44) can emerge from out of the guide duct (67), wherein the molded component (50) comprises a thermoplastic polymer matrix, and
- an insertion part (52) that is inserted into the molded component (50), wherein the insertion part (52) comprises
- a first segment (54) via which the insertion part (52) is attached to the molded component (50) in a material-locking manner, and
- at least one second segment (56) that is connected to the first segment (54) moveably relative to the first segment (54) and in a hinge-like manner and the second segment (56) closes the outlet (69) and opens it under the influence of the airbag (44) as it emerges from the guide duct (67), and
- the insertion part (52) comprises this thermoplastic polymer matrix, as well as the molded component (50) and the thermoplastic polymer matrix is, at least in the second segment (56), self-reinforcing
**characterized in that**
- the molded component (50) comprises reinforcement ribs (58) and
- the molded component (50) and/or the insertion part (52) comprise numerous attachment segments (72) for fixating an airbag module (46), wherein
- the attachment segments (72) include screw holes (68) through which the airbag module (46), which comprises bolts integrated in the airbag guiding device, can be fixated with the airbag guiding device (42), or
- the attachment segments (72) include hook-in openings (70), through which the airbag module (46) can be connected to the airbag guiding device (42) by means of a hook connection.

2. Airbag guiding device in accordance with claim 1,
**characterized in that** the thermoplastic polymer is polypropylene.

3. Airbag guiding device in accordance with either of claims 1 or 2,
**characterized in that** the molded part (50) is fiber-reinforced.

4. Airbag guiding device in accordance with claim 3,
**characterized in that** the molded component (50) is fiber-reinforced with glass, polypropylene and/or coal fibers.

5. Airbag assembly for a motor vehicle comprising
- an airbag module (46) with an airbag (44) and with a gas generator that interacts with the airbag (44) for inflating the airbag (44), and
- an airbag guiding device (42) in accordance with any of the preceding claims, wherein the airbag module (46) is attached to the airbag guiding device (42).

6. Inner cladding component for a motor vehicle comprising
- an airbag guiding device (42) in accordance with any of claims 1 to 4,
- an airbag module (46) with an airbag (44) and with a gas generator (48) that interacts with the airbag (44) for inflating the airbag (44), wherein the airbag module (46) is attached to the airbag guiding device (42), and
- a support component (62) that is attached to the airbag guiding device (42) in the region of the outlet (69).

7. Inner cladding component in accordance with claim 6,
**characterized in** the support component (62) is sprayed or is sprayed and provided with a decorative coating (64).

8. Method for producing an inner cladding component (10) in accordance with either of claims 6 or 7 comprising the following steps:
- Injection molding of a molded component (50) from a thermoplastic polymer or from a thermoplastic polymer matrix, wherein the molded component (50) defines a guide duct (67) for the airbag (44) with an outlet (69) through which the airbag (44) can emerge from the guide duct (67),
- Injection molding of an insertion part (52) that is inserted into the molded component (50), wherein the insertion part (52) comprises a first segment (54) to which the insertion part (52) is attached in a material-locking manner and at least one second segment (56), that is attached, moveably relative to the first segment (54), to the first segment (54) in a hinge-like manner and the second segment (56) closes the outlet (69) and opens it under the influence of the airbag (44) as it emerges from the guide duct (67), and wherein the thermoplastic polymer or the thermoplastic polymer matrix is self-reinforcing at least in the second segment (56), and
- Attaching, in the region of the outlet (69), a support component (62) to the airbag guiding device (42) that is formed by the molded component (50) and the insertion part (52).

9. Method in accordance with claim 8, further comprising the step of attaching an airbag module (46), having an airbag (44) and a gas generator (48) that interacts with the airbag (44) for inflating the airbag (44), to the airbag guiding device (42).

## Revendications

1. Dispositif de guidage de coussin gonflable pour guider un coussin gonflable (44) d'un véhicule automobile comprenant :
- une pièce de forme (50) ayant un canal de guidage (67) pour le coussin gonflable (44) avec un orifice de sortie (69) par lequel le coussin gonflable (44) peut sortir du canal de guidage (67),
* la pièce de forme (50) ayant une matrice de matière thermoplastique, et
- un insert (52) qui se place dans la pièce de forme (50),
l'insert (52) ayant :
* un premier segment (54) reliant l'insert (52) à la pièce de forme (50) par une liaison par la matière, et
* au moins un second segment (56) mobile par rapport au premier segment (54) en étant relié au premier segment (54) à la manière d'une charnière, le second segment (56) fermant l'orifice de sortie (69) et l'ouvrant sous l'action du coussin gonflable (44) sortant du canal de guidage (67), et
- l'insert (52) a la même matrice de matière thermoplastique que la pièce de forme (50) cette matrice de matière thermoplastique étant auto-renforcée dans le second segment (56),
dispositif **caractérisé en ce que**
- la pièce de forme (50) comporte des nervures de renfort (58), et
- la pièce de forme (50) et/ou l'insert (52) ont un nombre de segments de fixation (72) pour fixer un module de coussin gonflable (46),
dans lequel
* les segments de fixation (72) ont des trous de vis (68) par lesquels le coussin gonflable (46) se fixe par une liaison vissée par des vis intégrées dans le dispositif de guidage de coussin gonflable, au dispositif de guidage de coussin gonflable (42), ou
* les segments de fixation (72) ont des orifices d'accrochage (70) par lesquels le module de coussin gonflable (46) est relié au dispositif de guidage de coussin gonflable par une liaison par crochets.

2. Dispositif de guidage de coussin gonflable selon la revendication 1,
**caractérisé en ce que**
la matière thermoplastique est du polypropylène.

3. Dispositif de guidage de coussin gonflable selon l'une des revendications 1 ou 2,
**caractérisé en ce que**
la pièce de forme (50) est renforcée par des fibres.

4. Dispositif de guidage de coussin gonflable selon la revendication 3,
**caractérisé en ce que**
la pièce de forme (50) est renforcée par des fibres de verre, de polypropylène et/ou de carbone.

5. Unité de coussin gonflable pour un véhicule automobile comprenant :
- un module de coussin gonflable (46) muni d'un coussin gonflable (44) et d'un générateur de gaz (48) coopérant avec le coussin gonflable (44) pour gonfler le coussin gonflable (44), et
- un dispositif de guidage de coussin gonflable (42) selon l'une des revendications précédentes,
dans lequel
le module de coussin gonflable (46) est fixé au dispositif de guidage de coussin gonflable (42).

6. Composant d'habillage intérieur de véhicule automobile comprenant :
- un dispositif de guidage de coussin gonflable (42) selon l'une des revendications 1 à 4,
- un module de coussin gonflable (46) avec un coussin gonflable (44) et un générateur de gaz (48) coopérant avec le coussin gonflable (44) pour gonfler le coussin gonflable (44), le module de coussin gonflable (46) étant fixé au dispositif de guidage de coussin gonflable (42), et
- une pièce de support (62) fixée au dispositif de guidage de coussin gonflable (42) dans la région de l'orifice de sortie (69).

7. Composant d'habillage intérieur de véhicule automobile selon la revendication 6,
**caractérisé en ce que**
la pièce de support (62) est injectée ou est injectée et/ou munie d'une couche de décor (64).

8. Procédé de réalisation d'une pièce d'habillage intérieur (10) selon l'une des revendications 6 ou 7,
comprenant les étapes suivantes consistant à :
- injecter la pièce de forme (50) en une matière thermoplastique ou une matrice de matière thermoplastique, la pièce de forme (50) réalisant un canal de guidage (67) pour le coussin gonflable (44) avec un orifice de sortie (69) par lequel le coussin gonflable (44) peut sortir du canal de guidage (67),
- injecter un insert (52) de la même matière thermoplastique ou la même matrice de matière thermoplastique dans la pièce de forme (50), l'insert (52) ayant un premier segment (54) par lequel l'insert (52) est relié à la pièce de forme par une liaison par la matière et au moins un second segment (56) relié de manière mobile par rapport au premier segment (54) à la manière d'une charnière, au premier segment (54) et le second segment (56) fermant l'orifice de sortie (69) et s'ouvrant sous l'action du coussin gonflable (44) sortant du canal de guidage (67), la matière thermoplastique ou la matrice de matière thermoplastique étant au moins autorenforcées dans le second segment (56), et
- fixer une pièce de support (62) dans la région de l'orifice de sortie (69) au dispositif de guidage de coussin gonflable (42) réalisé par la pièce de forme (50) et l'insert (52).

9. Procédé selon la revendication 8,
consistant en outre à :
fixer un module de coussin gonflable (46) avec un coussin gonflable (44) et un générateur de gaz (48) coopérant avec le coussin gonflable (44) pour gonfler le coussin (44) du dispositif de guidage de coussin gonflable (42).
